# EUROPÄISCHE PATENTANMELDUNG

(11) **EP 2 712 038 A1**
(43) Veröffentlichungstag der Anmeldung: **26.03.2014**
(21) Anmeldenummer: 12185869.0
(22) Anmeldetag: 25.09.2012
(51) Int. Cl.: H01T 4/14, H02G 13/00

(54) **Schutzelektrode sowie Leitungsableiter mit einer solchen Schutzelektrode**

(71) Anmelder: Siemens Aktiengesellschaft, 80333 München (DE)
(72) Erfinder: Goßler, Bastian, 13507 Berlin (DE); Pippert, Erhard, 14624 Dallgow-Döberritz OT Seeburg (DE); Sulitze, Markus, 14612 Falkensee (DE); Udovcic, Danijel, 12347 Berlin (DE)

(57) **Zusammenfassung**

Eine erfindungsgemäße Schutzelektrode (1) ist zum Schutz einer Freileitung (2) vor Beschädigungen durch Spannungsüberschläge ausgebildet. Eine Freileitung (2) st dabei eine Stromübertragungsleitung zur Übertragung von Hoch- oder Mittelspannungen und ist über eine Aufhängearmatur (28) an einem Mast befestigt. Die Aufhängearmatur kann dabei einen Isolator (27) umfassen. Eine erfindungsgemäße Schutzelektrode (1) weist einen elektrisch leitenden Elektrodenkörper auf, der mittels einer mit diesem verbundenen Befestigungsvorrichtung von der Aufhängearmatur (28) beabstandet an der Freileitung (2) befestigbar ist. Die Schutzelektrode (1) kann so direkt an der Freileitung (2) befestigt werden, ohne dass an der Aufhängearmatur (28) besondere Vorrichtungen zur Befestigung der Schutzelektrode vorgesehen sein müssen. Eine solche Schutzelektrode ist damit universell nachrüstbar, ohne konstruktive Gegebenheiten am Montageort kennen zu müssen.

## Beschreibung

Die Erfindung betrifft eine Schutzelektrode gemäß dem Oberbegriff des Patentanspruchs 1 sowie einen Leitungsableiter mit einer solchen Schutzelektrode gemäß dem Oberbegriff des Patentanspruchs 7.

Gattungsgemäße Schutzelektroden dienen dem Schutz von Freileitungen vor Überschlägen. In Stromübertragungsnetzen werden häufig Leitungsableiter eingesetzt, die bei Blitzeinschlägen in die Freileitung auftretende Überpannung zur Erde hin ableiten. Solch ein Leitungsableiter ist parallel zu einem Isolator angeordnet und ist von der Freileitung durch eine Funkenstrecke getrennt. Tritt eine Überspannung beispielsweise durch einen Blitzeinschlag in die Freileitung auf, so wird die Funkenstrecke durch einen Lichtbogen kurzgeschlossen und die Überspannung kontrolliert durch den Leitungsableiter zur Erde hin abgeleitet. Die Endpunkte der Funkenstrecke sind dabei erdseitig eine am Leitungsableiter anordnete Erdelektrode und hochspannungsseitig eine am Isolator angeordnete Schutzelektrode oder die Hochspannungsleitung selber. Eine solche Schutzelektrode verhindert also, dass der Lichtbogen direkt an der Freileitung anliegt und diese korrodiert.

In der EP 0 506 393 B1 ist eine solche Anordnung aus Isolator und Leitungsableiter mit Funkenstrecke in Figur 11 gezeigt. Die hochspannungsseitige Schutzelektrode ist hier eine Stabförmige, am Isolatorfuß befestigte Elektrode.

In der US 2012/0087055 A1 ist eine ähnliche Anordnung gezeigt, allerdings wirkt hier der Isolatorfuß selbst als Schutzelektrode. Weitere Ausführungsbeispiele finden sich in den Fachbeiträgen "Design and performance of external gap type line arrester" von K. Tsuge, erschienen als Konferenzbeitrag zur im Oktober 2002 abgehaltenen "Transmission and Distribution Conference and Exhibition, Asia Pacific", sowie in "Externally Gapped Line Arrester A Comprehensive Review" von J. J. Woodward, erschienen als Konferenzbeitrag zur im April 2010 abgehaltenen "Transmission and Distribution Conference and Exposition".

Die im Stand der Technik gezeigten Schutzelektroden benötigen eine dafür vorgesehene Befestigungsvorrichtung und sind daher nur schwer nachrüstbar.

Der vorliegenden Erfindung liegt die Aufgabe zugrunde, eine Schutzelektrode anzugeben, die einen effizienten Schutz einer Freileitung vor Lichtbögen gewährleistet, und die leicht nachrüstbar ist.

Diese Aufgabe wird mit den Mitteln der Erfindung gemäß Patentanspruch 1 gelöst.

Demnach ist eine Schutzelektrode zum Schutz einer Freileitung vor Beschädigungen durch Spannungsüberschläge ausgebildet. Eine Freileitung ist dabei eine Stromübertragungsleitung zur Übertragung von Hoch- oder Mittelspannungen und ist über eine Aufhängearmatur an einem Mast befestigt. Die Aufhängearmatur kann dabei einen Isolator umfassen. Eine erfindungsgemäße Schutzelektrode weist einen elektrisch leitenden Elektrodenkörper auf, der mittels einer mit diesem verbundenen Befestigungsvorrichtung von der Aufhängearmatur beabstandet an der Freileitung befestigbar ist. Die Schutzelektrode kann so direkt an der Freileitung befestigt werden, ohne dass an der Aufhängearmatur besondere Vorrichtungen zur Befestigung der Schutzelektrode vorgesehen sein müssen. Eine solche Schutzelektrode ist damit universell nachrüstbar, ohne konstruktive Gegebenheiten am Montageort kennen zu müssen.

In einer vorteilhaften Ausbildung der Erfindung ist der Elektrodenkörper bogenförmig ausgebildet und um die Freileitung herum angeordnet. Der Elektrodenkörper kann beispielsweise kreisringförmig sein, wobei der Kreisring nicht vollständig geschlossen sein muss. Je nach Anforderung kann ein Elektrodenkörper, der einen Bogen von 90 Grad einschließt bereits einen ausreichenden Schutz bieten, besonders bevorzugt sind aber Elektrodenkörper, die einen Bogen von mehr als 180 Grad insbesondere mehr als 270 Grad einschließen. Der Bogen des Elektrodenkörpers kann eine Öffnung aufweisen, die dem Durchmesser der Freileitung entspricht, um eine einfache Montage zu ermöglichen.

Vorzugsweise weist die Befestigungsvorrichtung einen am Elektrodenkörper angeordneten Steg mit einem gebogenen und dem Durchmesser der Freileitung angepassten Abschnitt auf. Mittels des gebogenen Abschnitts kann die Befestigungsvorrichtung so nach Art einer Rohrschelle an der Freileitung befestigt werden, was eine besonders einfache Nachrüstung erlaubt.

In einer weiteren vorteilhaften Ausgestaltung ist der Elektrodenkörper aus einem ersten Teilring und einem zweiten, den ersten fortsetzenden Teilring gebildet. Die beiden Teilringe können beispielsweise aus Bögen gebildet werden, die jeweils einen halben Kreisring bilden und zusammengesetzt einen Kreisring bilden. Werden die Teilringe bei der Montage zusammengesetzt, so ist nach der Montage die Freileitung von einer kreisringförmigen Schutzelektrode umgeben, die nur an den Stoßstellen der Teilringe Öffnungen aufweist. Die Schutzelektrode umgibt so die Freileitung fast vollständig und verhindert somit besonders effektiv, dass ein Lichtbogen die Freileitung erreicht und so korrodiert. Außerdem liegt durch diese rotationssymmetrische Anordnung der Schwerpunkt der Schutzelektrode in deren Mittelpunkt.

Des Weiteren sieht eine vorteilhafte Ausgestaltung der Erfindung vor, dass die Befestigungsvorrichtung einen ersten Teilsteg und einen zweiten Teilsteg aufweist. Dabei ist der erste Teilsteg mit dem ersten Teilring und der zweite Teilsteg mit dem zweiten Teilring verbunden. Außerdem weisen der erste und der zweite Teilsteg jeweils einen gebogenen und dem Durchmesser der Freileitung angepassten Abschnitt auf, und der erste Teilsteg und der zweite Teilsteg sind miteinander und mit der Freileitung verbindbar. Eine solche Konstruktion ermöglicht eine besonders einfache Montage.

In einer weiteren vorteilhaften Ausgestaltung weist die Schutzelektrode zwei baugleiche Teile mit jeweils einem Teilring und einem Teilsteg auf. Diese Ausgestaltung ist besonders effizient, da nicht verschiedene Teile bevorratet werden müssen, sondern zwei baugleiche Teile zu einer Schutzelektrode zusammengesetzt werden.

Eine weitere Aufgabe der Erfindung liegt darin, einen Leitungsableiter anzugeben, der leicht nachgerüstet werden kann.

Diese Aufgabe wird mit den Mitteln der Erfindung gemäß Patentanspruch 7 gelöst.

Ein Leitungsableiter, zum isolierenden Verbinden einer Freileitung mit einem Mast weist dabei eine Erdelektrode und eine elektrisch mit der Freileitung verbundene Gegenelektrode auf. Die Gegenelektrode ist hierbei eine Schutzelektrode, die einen elektrisch leitenden Elektrodenkörper aufweist, der mittels einer mit diesem verbundenen Befestigungsvorrichtung von der Aufhängearmatur beabstandet an der Freileitung befestigbar ist. Der Leitungsableiter ist an einem Ende mit Erdpotential verbunden, also beispielsweise durch direkte Verbindung mit dem Mast, der seinerseits geerdet ist, und weist an dem anderen Ende die Erdelektrode auf. Am Mast sind oft geeignete Befestigungsmöglichkeiten vorhanden. Für die Gegenelektrode fehlen diese aber häufig. Erfindungsgemäß bildet die Erdelektrode mit der Gegenelektrode, die hier eine Schutzelektrode ist, eine Funkenstrecke, das heißt zwischen der Erdelektrode und der Gegenelektrode befindet sich Luft. Steigt die Spannung zwischen der Erdelektrode und der Gegenelektrode, beispielsweise bei einem Blitzeinschlag in die Freileitung, über eine Schwellenspannung an, so wird die Funkenstrecke mit einem Lichtbogen überbrückt und kurzgeschlossen. Ein Leitungsableiter mit einer solchen Schutzelektrode ist leicht nachrüstbar und kann auch in bestehende Installationen nachträglich eingebaut werden, um einen besseren Schutz vor Blitzeinschlägen in die Freileitung zu erreichen.

Vorzugsweise ist die Anordnung und/oder Ausbildung der Erdelektrode derart veränderlich, dass Funkenstrecken unterschiedlicher Länge einstellbar sind. Die Erdelektrode könnte dabei so an dem Leitungsableiter angeordnet sein, dass sie in verschiedenen Positionen am Leitungsableiter befestigbar ist, oder die Erdelektrode selbst könnte teleskopartig verlängerbar ausgebildet sein, oder aus zwei oder mehr Teilen bestehen, die in unterschiedlicher Anordnung zueinander montierbar sind. Durch die einstellbare Länge der Funkenstrecke ist auch die Schwellenspannung, bei der die Funkenstrecke durch einen Lichtbogen kurzgeschlossen wird, einstellbar. Dadurch lässt sich einstellen, ob die Funkenstrecke bereits bei Schaltereignissen kurzgeschlossen wird, oder erst bei höheren Spannungen, wie sie bei Blitzeinschlägen auftreten.

Im Folgenden wird die Erfindung anhand der Zeichnungen näher erläutert. Dabei zeigen:
Figur 1 einen fertig installierten Leitungsableiter mit einer erfindungsgemäßen Schutzelektrode,
Figur 2 eine Ausführungsform einer erfindungsgemäßen Schutzelektrode,
Figur 3 eine weitere Ausführungsform einer erfindungsgemäßen Schutzelektrode.

Einander entsprechende Teile sind in allen Figuren mit den gleichen Bezugszeichen versehen.

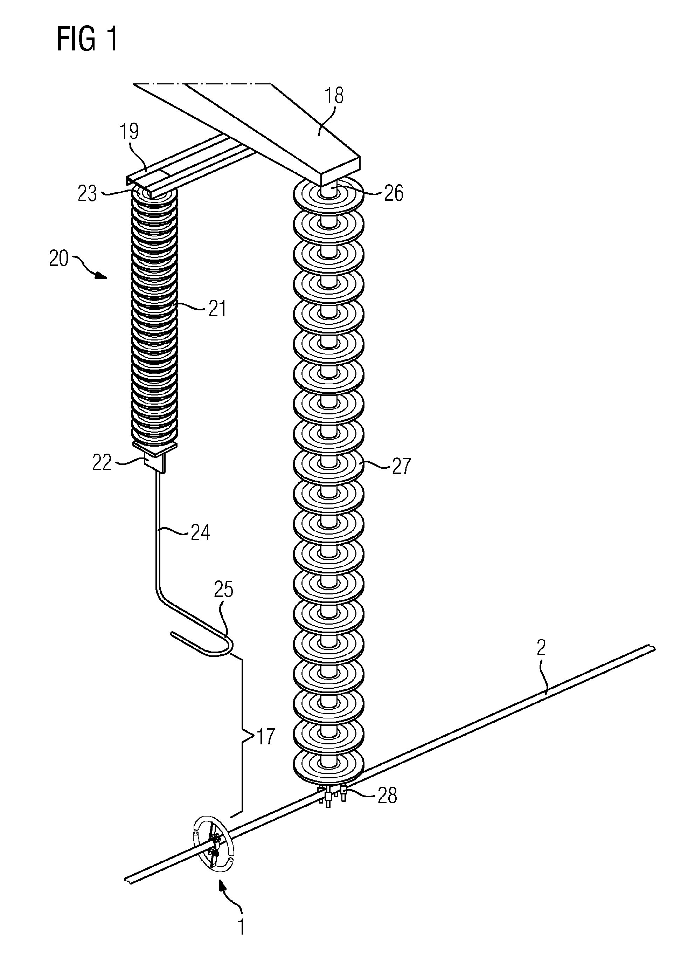

Die Figur 1 zeigt eine Freileitung 2, die mittel eines Isolators 27 an einem Mastausleger 18 eines Strommastes befestigt ist. Die Freileitung 2 ist dabei ein elektrischer Leiter, der eine Hoch- oder Mittelspannung führt. Die Freileitung 2 ist dazu oberirdisch an Strommasten aufgehängt. Meist werden an einem Mast mehrere solcher elektrischen Leiter, die zum Beispiel unterschiedliche Phasen tragen können, aufgehängt. Die Strommasten liegen in der Regel auf Erdpotential. Zur Isolation der spannungsführenden Freileitung 2 gegen das Erdpotential ist die Freileitung 2 durch einen Isolator 27 vom Mastausleger 18 beabstandet aufgehängt. Der Isolator 27 ist dabei an einem Ende mit einer Armatur 26 am Mastausleger 18 befestigt und trägt am anderen Ende eine Aufhängearmatur 28 für die Freileitung 2.

Ohne weitere Schutzmaßnahmen besteht bei Blitzeinschlägen in den Mast oder die Freileitung 2 die Gefahr, dass einer der Isolatoren 27 zerstört wird und Stromausfälle oder Kurzschlüsse auftreten. Um dies zu verhindern ist hier ein Leitungsableiter 20 elektrisch parallel zum Isolator 27 angeordnet. Der Leitungsableiter 20 weist dabei eine aus einem spannungsabhängigen Widerstand bestehende Ableitsäule 21 auf, die von zwei Endarmaturen 22, 23 begrenzt ist. Die Ableitsäule 21 wirkt dabei bei Spannungen, wie sie im normalen Betrieb der Freileitung 2 auftreten, als Isolator. Treten Überspannungen auf, die beispielsweise durch Blitzeinschläge ausgelöst werden können, so wird der elektrische Widerstand der Ableitsäule 21 herabgesetzt, sie wird besser leitend. Zur mechanischen Stabilisierung werden häufig Zugelemente wie Glasfaserstäbe zwischen den Endarmaturen 22, 23 eingespannt. Zum Schutz gegen Umwelteinflüsse ist die Ableitsäule 21 mit einem wetterfesten und elektrisch isolierenden Gehäuse beispielsweise aus Silikon oder Porzellan umgeben. Die obere Endarmatur 23 dient zudem der Befestigung am Strommast. Hier ist die Endarmatur 23 an einer Traverse 19 des Mastauslegers 18 befestigt. Sind Mastausleger 18 und Traverse 19 elektrisch leitend, ist die Endarmatur 23 und somit auch die Ableitsäule 21 damit an einem Ende geerdet. Alternativ kann die Endarmatur 23 mit einem Erdkabel mit Erdpotential verbunden sein. Am anderen Ende ist an der Endarmatur 22 eine Erdelektrode 24 angebracht, die zusammen mit einer beabstandet von der Aufhängearmatur 28 an der Freileitung angebrachten Schutzelektrode 1 eine Funkenstrecke 17 bildet. Die Erdelektrode 24 kann dabei wie abgebildet am von der Ableitsäule 21 entfernten Ende einen gebogenen Bügel 25 aufweisen, der den Versatz des Befestigungspunktes des Leitungsableiters 20 am Mast gegenüber der Freileitung 2 ausgleicht, so dass ein Teil des Bügels 25 senkrecht über der Schutzelektrode 1 liegt. Die Erdelektrode 24 ist an der Endarmatur 22 in verschiedenen Positionen montierbar, so dass der Abstand des Bügels 25 von der Schutzelektrode 1 und damit die Länge der Funkenstrecke 17 variiert werden kann. Alternativ kann die Erdelektrode 24 teleskopartig verlängerbar sein, indem beispielsweise der senkrecht vom Bügel 25 wegführende und mit der Erdelektrode 24 verbundene Schaft durch zwei ineinander schiebbare Rohre gebildet wird, oder indem dieser Schaft aus zwei Flachstählen gebildet wird, die überlappend in verschiedenen Positionen miteinander verbindbar sind.

Im normalen Betrieb der Freileitung 2 ist der Leitungsableiter 20 über die Funkenstrecke 17 von der Freileitung isoliert. Wäre der Leitungsableiter 20 direkt mit der Freileitung 2 verbunden, so würde er über Leckströme erwärmt, was zur Alterung des Leitungsableiters 20 führe. Durch die Isolierung mittels der Funkenstrecke 17 fließt kein Strom durch den Leitungsableiter 20, was seine Lebensdauer erhöht.

Schlägt nun ein Blitz in die Freileitung 2 oder den Strommast ein, so führt das zu einer Überspannung. Da die Ableitsäule 21 durch die Spannungserhöhung nun leitend ist, ist der Isolationsabstand zwischen Freileitung 2 und Erdpotential im Strompfad durch den Leitungsableiter 20 durch die Funkenstrecke 17 bestimmt. Da dieser Isolationsabstand kleiner ist, als der des Isolators 27, wird die Funkenstrecke 17 durch einen Lichtbogen überbrückt und damit kurzgeschlossen. Der Leitungsableiter 20 ist damit elektrisch mit der Freileitung 2 verbunden. Die Überspannung wird dadurch kontrolliert über den Leitungsableiter 20 zur Erde hin abgeleitet. Wenn die Überspannung einen kritischen Wert unterschritten hat, erlischt der Lichtbogen und der Leitungsableiter 20 ist wieder von der Freileitung 2 isoliert.

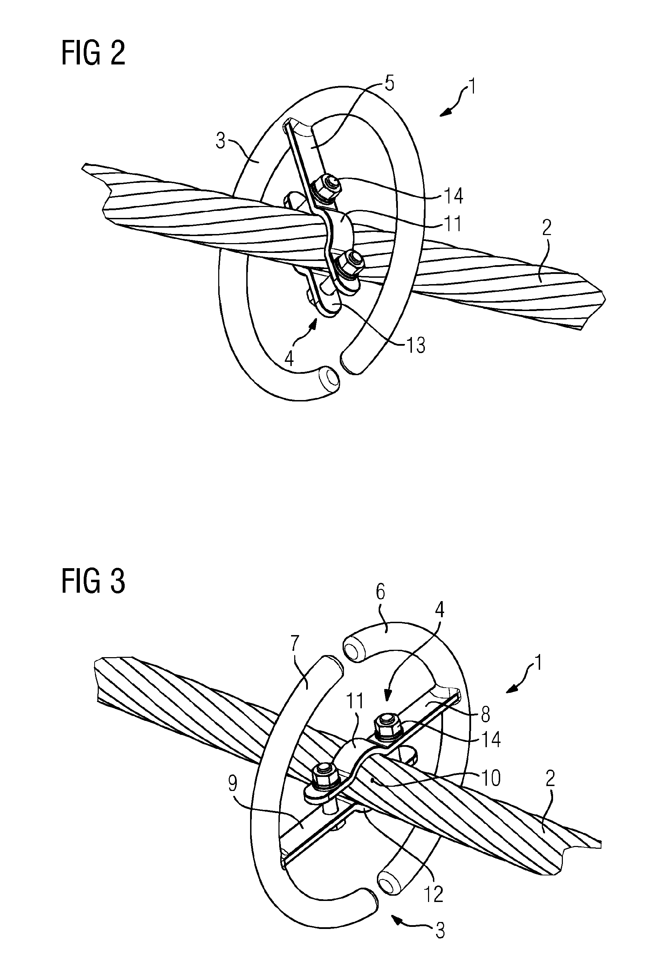

Die Figur 2 zeigt eine Detailansicht einer Ausführungsform einer erfindungsgemäßen Schutzelektrode 1, die an einer Freileitung 2 befestigt ist. Die Schutzelektrode 1 weist einen Elektrodenkörper 3 auf, der ringförmig gebogen ist. Der Ring ist allerdings nicht geschlossen, sondern weist eine Öffnung auf. Eine Befestigungsvorrichtung 4 ist auf der der Öffnung entgegengesetzten Seite mit dem Elektrodenkörper 3 auf dessen Innenseite verbunden. Die Befestigungsvorrichtung 4 weist hier einen Steg 5 mit einem gebogenen Abschnitt 11 auf. Der gebogene Abschnitt 11 ist dem Durchmesser der Freileitung 2 angepasst. Die Befestigungsvorrichtung 4 weist weiterhin eine Schelle 13 auf, die mit Hilfe von Befestigungsmitteln, wie den hier beispielhaft dargestellten Schrauben 14, an dem Steg 5 befestigt werden kann. Zwischen der Schelle 13 und dem Steg 5 mit dem gebogenen Abschnitt 11 kann die Freileitung 2 eingeklemmt werden, wodurch die Schutzelektrode 1 an der Freileitung befestigbar ist. Die Öffnung des Elektrodenkörpers 3 ist dabei vorzugsweise so zu bemessen, dass die Freileitung 2 durch diese hindurch passt, so dass die Befestigungsvorrichtung 4 im Inneren des ringförmigen Elektrodenkörpers 3 an der Freileitung 2 befestigt werden kann.

In der Figur 3 ist ein weiteres Ausführungsbeispiel einer erfindungsgemäßen Schutzelektrode 1 dargestellt. Hier ist der Elektrodenkörper 3 aus einem ersten Teilring 6 und einem zweiten Teilring 7 gebildet. Die beiden Teilringe 6, 7 sind so angeordnet, dass der zweite Teilring 7 den ersten Teilring 6 fortsetzt, so dass die beiden Teilringe 6, 7 zusammen nahezu einen Kreisring mit dem Mittelpunkt 10 bilden. Die Befestigungsvorrichtung 4 weist hier einen ersten Teilsteg 8 und einen zweiten Teilsteg 9 auf. Beide Teilstege 8, 9 weisen jeweils einen gebogenen Abschnitt 11, 12 auf, der in seinem Durchmesser dem der Freileitung angepasst ist. Der erste Teilsteg 8 ist mit dem ersten Teilring 6 und der zweite Teilsteg 9 mit dem zweiten Teilring 7 verbunden und zwar derart, dass die Teilstege 8, 9 jeweils mit einem Ende mit der Mitte des bogenförmigen jeweiligen Teilrings 6, 7 verbunden sind und das andere Ende in Richtung des Mittelpunktes 10 zeigt.

Die Schutzelektrode 1 ist hier also aus zwei gleichartigen Teilen, jeweils mit einem Teilring 6, 7 und einem Teilsteg 8, 9, zusammengesetzt, die rotationssymmetrisch um 180° zueinander gedreht angeordnet sind. Die beiden Teile können von entgegengesetzten Seiten an der Freileitung 2 angebracht und beispielsweise mittels Schrauben 14 miteinander und mit der Freileitung 2 verbunden werden.

Dadurch, dass der Elektrodenkörper 3 die Freileitung 2 fast vollständig umgibt, ist die Freileitung 2 besonders gut vor dem Lichtbogen geschützt. Selbst falls ein Lichtbogen wandern sollte, wird er sich eher entlang des Elektrodenkörpers bewegen, als abzureißen und auf die Freileitung 2 zu springen.

Durch die rotationssymmetrische Anordnung ist die Schutzelektrode 1 in ihrem Masseschwerpunkt an der Freileitung 2 befestigt. Sollte sich die Befestigung der Schutzelektrode 1 an der Freileitung 2 zum Beispiel durch thermische Einflüsse lockern, so wird sie sich durch diese Anordnung des Masseschwerpunktes nicht drehen. Andernfalls wäre es möglich, dass die Funkenstrecke 17 derart verändert wird, dass ein Lichtbogen auf die Freileitung 2 überspringen und diese dadurch beschädigen kann.

## Patentansprüche

1. Schutzelektrode (1) zum Schutz einer Freileitung (2) vor Beschädigungen durch Spannungsüberschläge, wobei die Freileitung (2) zur Übertragung von Hoch- oder Mittelspannungen ausgebildet und über eine Aufhängearmatur (28) an einem Mast befestigt ist,
mit einem elektrisch leitenden Elektrodenkörper (3) und einer mit diesem elektrisch verbundenen Befestigungsvorrichtung (4),
**dadurch gekennzeichnet,**
**dass** der Elektrodenkörper (3) mittels der Befestigungsvorrichtung (4) von der Aufhängearmatur (28) beabstandet an der Freileitung (3) befestigbar ist.

2. Schutzelektrode (1) nach Anspruch 1,
**dadurch gekennzeichnet,**
**dass** der Elektrodenkörper (3) bogenförmig ausgebildet und um die Freileitung (2) angeordnet ist.

3. Schutzelektrode (1) nach einem der Ansprüche 1 oder 2, **dadurch gekennzeichnet,**
**dass** die Befestigungsvorrichtung (4) einen am Elektrodenkörper (3) angeordneten Steg (5) mit einem gebogenen und dem Durchmesser der Freileitung (3) angepassten Abschnitt (11) aufweist.

4. Schutzelektrode nach einem der Ansprüche 1 bis 3,
**dadurch gekennzeichnet,**
**dass** der Elektrodenkörper (3) aus einem ersten Teilring (6) und einem zweiten, den ersten fortsetzenden Teilring (7) gebildet ist.

5. Schutzelektrode (1) nach Anspruch 4,
**dadurch gekennzeichnet**,
die Befestigungsvorrichtung (4) einen ersten Teilsteg (8) und einen zweiten Teilsteg (9) aufweist, wobei der erste Teilsteg (8) mit dem ersten Teilring (6) und der zweite Teilsteg (9) mit dem zweiten Teilring (7) verbunden sind, und wobei der erste und der zweite Teilsteg (8,9) jeweils einen gebogenen und dem Durchmesser der Freileitung (2) angepassten Abschnitt (11,12) aufweisen, und wobei der erste Teilsteg (8) und der zweite Teilsteg (9) miteinander und mit der Freileitung (2) verbindbar sind.

6. Schutzelektrode (1) nach einem der Ansprüche 4 bis 6,
**dadurch gekennzeichnet,**
**dass** die Schutzelektrode (1) zwei baugleiche Teile mit jeweils einem Teilring (6, 7) und einem Teilsteg (8,9) aufweist.

7. Leitungsableiter (20), zum isolierenden Verbinden einer Freileitung (2) mit einem Mast, mit einer Erdelektrode (24) und einer elektrisch mit der Freileitung verbundenen Gegenelektrode,
**dadurch gekennzeichnet,**
**dass** die Gegenelektrode eine Schutzelektrode (1) nach einem der Ansprüche 1 bis 6 ist und die Erdelektrode (24) mit der Schutzelektrode (1) eine Funkenstrecke (17) ausbildet.

8. Leitungsableiter (20) nach Anspruch 7,
**dadurch gekennzeichnet,**
**dass** die Anordnung und/oder Ausbildung der Erdelektrode (24) derart veränderlich ist, dass Funkenstrecken (17) unterschiedlicher Länge einstellbar sind.
